# EUROPEAN PATENT APPLICATION

(11) **EP 1 475 975 A1**
(43) Date of publication of application: **10.11.2004**
(21) Application number: 04396030.1
(22) Date of filing: 15.04.2004
(51) Int. Cl.: H04Q 7/22

(54) **Method and system for transmitting messages in various formats**

(30) Priority: 08.05.2003 FI 20030693
(71) Applicant: TeliaSonera Finland Oyj, 00510 Helsinki (FI)
(72) Inventor: Pietikäinen, Juha, 00390 Helsinki (FI)
(74) Representative: Helino, Timo

(57) **Abstract**

The invention relates to a method for transmitting a message to one or more terminal devices of a different type in a telecommunication network, the method comprising steps for creating, sending, transmitting and receiving the message to be transmitted. In the method, the message to be transmitted and the transmission data needed in the transmission are combined to form a generic message packet when creating the message, a copy is formed of the message packet in question for each recipient when sending the message, the copies are distributed in accordance with the recipients when sending the message, each copy is modified into the form required by the recipient of the copy in question when transmitting the message, and each modified copy is transmitted to the recipient in accordance with the telecommunication protocol required by the recipient in question utilising the transmission data when transmitting the message.

## Description

The invention relates to telecommunication systems. In particular, the invention relates to a method in which a message is transmitted to recipients in various formats.

### PRIOR ART

The arranging of services based on short messages is becoming common. The transmission of short messages is easy to a mobile station user whose mobile station is included in the Global System for Mobile Communications (GSM).

By means of the short message service it is possible to transmit short messages that typically are up to 160 characters long between mobile stations. The transmission of messages does not presume that the mobile station is switched on. If the mobile station cannot be reached, the message is saved to a short message service centre. The short message service centre saves the message for several days, and in case the mobile station receiving the message is activated in the area of the mobile communication network, the message is transmitted to the mobile station. Messages are transmitted either in the area of the same cell or to other cells by means of the roaming feature of the mobile station. Short messages can be transmitted also to other devices such as digital phones or e-mail messages.

Various services are implemented by means of short messages. Typically, a user of a mobile station sends a short message to a service provider who reads the short message and implements a service, e.g. transfers the balance information of the mobile station bill to the user. On the other hand, short messages can be used to transmit e-mail messages from the Internet to mobile stations.

An e-mail typically is a short message which is transmitted on the Internet from the sender to the recipient Typically, a recipient has at his or her disposal a personal computer from which the e-mail is sent using an e-mail application. The e-mail is routed via the Internet by means of routers to the recipient, who further reads the e-mail using an e-mail application. For routing an e-mail, the e-mail address of the recipient is needed. The e-mail is transferred by a connectionless data transfer because no fixed connection is established between the sender and the recipient. An e-mail usually consists of text as an attachment of which images, voice or some other file can be sent.

One creation, management and decentralisation system of distributed program objects in the network is called the Common Object Request Broker Architecture (CORBA). The system enables the communication of programs that are disposed in different parts of the network. The transmission of messages is performed via a broker of the interface. The most essential concept of the program broker architecture is the object request broker (ORB). The object request broker coordinates client and server programs. Thus, a client program can ask the server for a service without the client program knowing where the service is situated or what kind of the interface of the service program is. For the communication between programs, a General Inter-ORB protocol (GIOP) or on the Internet an Internet Inter-ORB Protocol (IIOP) is used. Determined in the CORBA architecture are CORBA Event Service and CORBA notification Service known per se. The CORBA Notification Service functions analogously with the CORBA Event Service, but includes, in addition, automatic/transparent mechanisms consistent with the CORBA architecture that have been improved from the CORBA Event Service for ensuring the message transmission further in the transmission chain.

Particularly problematic is the transmission of a message to several different formats. Services need to send very different types of messages. As an example, we mention an e-mail, short messages, voice mails, digital photographs and video. Characteristic of the different message types is that the messages are sent with very varying mechanisms and protocols. For example, an e-mail is sent using a Simple Mail Transfer Protocol (SMTP) by means of an e-mail server and the short messages are sent using a Universal Computer Protocol (UCP) via the short message service centre. In particular, in the telecommunication world, the protocols used for the control of different devices typically are device manufacturer specific, and there is no proper standardised manner nor a common, established manner for the transmission of various messages. Due to this, the makers of the services must each study and implement manufacturer-specific, so-called proprietary-type protocols over and over again.

Both software and services will in the future consist, in increasing quantities, of components which are run in a distributed, networked environment. One cannot think that services would be run in one machine which has physical connections to devices (e-mail servers, SMSC, etc.) needed in the transmission of different types of messages and which would have the necessary connecting traffic agreements, etc. Instead, the services are distributed to be run in different machines, and in spite of this, the services must be able to transmit different types of messages.

In addition to the services, also the transmitter components that take care of the transmission of the message also are problematic. The transmitter components can get into a state in which they dot not function.

Previously known is a solution in which individual transmission services have been built for the transmission of messages. Usually, the makers of the services must each study and implement manufacturer-specific, so-called proprietary protocols over and over again. There have been built in the services, even for each service specifically, various implementations for communicating e.g. with the short message service centre. The aforementioned is unnecessary and overlapping work. Each message type requires, in addition, an implementation of their own. If, for example, the service wishes to send both e-mails and short messages, the service must implement the protocols needed in the transmission of both separately. Previously, in the manner described above by means of distribution and duplication there has been no attempt to improve the dependability of the message transmission mechanisms. The possible service-specific solutions typically require that the system is run in a certain static environment, according to which it has been designed. Usually it is not possible that it would be easy to start in the network several pieces of components that take care of the transmission of certain types of messages to increase the dependability and capacity without having to modify the services themselves.

The objective of the present invention is to eliminate or alleviate the problems referred to above. One further objective of the invention is to enable a considerably easy method for identifying messages in a mobile station with a limited amount of memory and calculation capacity.

### SUMMARY OF THE INVENTION

The invention enables one to send a generic message to recipients who have terminal devices that are different in respect of their technical features. Thus, the message need not be individualised according to the terminal device of the recipient.

The invention relates to a method for simultaneous transmission of a message to one or more terminal devices of a different type in a telecommunication network. According to the method, a message to be transmitted is created, the message in question is sent, the message in question is transmitted, and the message in question is received. The message is e.g. an e-mail message, a short message, a voice mail, a facsimile, a still image or a video image. The terminal device that functions as the recipient of the message is e.g. a mobile station provided with a short message feature, a computer provided with an e-mail software application or a facsimile device.

According to the invention, the message to be transmitted as well as the transmission data needed in the transmission is combined to form a generic message packet when creating the message. The transmission data comprises the data needed in the transmission of the message in question, such as e.g. information on where the message is coming from and where the message is going to. The word "generic" is herein used to mean "general-purpose" in that sense that the created message packet can be sent as such to different types of terminal devices; in other words, there is no need to create a different message packet for a terminal device that receives e.g. e-mail than e.g. for a terminal device that receives facsimiles. Further, according to the invention, a copy is made of the message packet in question for each recipient when sending the message. Further, according to the invention, the copies are distributed according to the recipients when sending the message. Further, according to the invention, each copy is transformed into the form required by the recipient of the copy in question when transmitting the message. Still according to the invention, each transformed copy is transmitted to the recipient in accordance with the telecommunication protocol required by the recipient in question utilising the transmission data when transmitting the message.

In one embodiment of the invention, the distribution of the copies is performed by means of the Event Service or Notification Service of the CORBA architecture.

In one embodiment, transmission data is written and read by way of a standard interface.

Further, the invention relates to a system for the simultaneous transmission of a message to one or more terminal devices of a different type in a telecommunication network. The system in question comprises a telecommunication network for transmitting the message, a client's terminal device for creating and sending the message to be transmitted, the client's terminal device being arranged in conjunction with the telecommunication network, and one or more terminal devices for receiving the message to be transmitted, which terminal devices are each of a predetermined type and which terminal devices are each arranged in conjunction with the telecommunication network. The client's terminal device has been implemented e.g. via software and/or hardware.

According to the invention, the system further comprises a packaging element for combining the message to be transmitted and the transmission data needed in the transmission of the message in question to form a generic message packet. The packaging element in question is arranged in conjunction with the client's terminal device, and has been implemented e.g. via software and/or hardware. Further, according to the invention, the system comprises a forwarding element for copying the message packet and for forwarding the copies to the channel elements in accordance with the receiving terminal devices. The forwarding element in question is arranged in conjunction with the client's terminal device, and has been implemented e.g. via software and/or hardware. The functionality of the forwarding element can be alternatively implemented also in the telecommunication network. Further, according to the invention, the system comprises one or more channel elements, each for receiving a message packet that comprises a message to be transmitted to a terminal device of a predetermined type from the forwarding element and forwarding thereof to the corresponding transmitter element. The channel elements in question are each arranged in conjunction with the telecommunication network, and have been implemented e.g. via software and/or hardware. Further, according to the invention, the system comprises one or more transmitter elements, each for receiving a message packet that comprises a message to be transmitted to a terminal device of a predetermined type from the corresponding channel element, for transforming into the form required by the terminal device in question, as well as for forwarding to the terminal device in question in accordance with the telecommunication protocol required by the terminal device in question utilising the transmission data. The transmitter components in question are each arranged in conjunction with the telecommunication network in question, and have been implemented e.g. via software and/or hardware. The transmitter components can be placed into a distributed network architecture completely randomly. In other words, different elements can be disposed physically in the same machine, or completely in separate machines.

In one embodiment of the invention, the system further comprises one or more copies of one or more transmitter elements or channel elements. The copied transmitter or channel elements in question are each arranged in conjunction with the telecommunication network, and have been implemented e.g. via software and/or hardware. The copies of the transmitter element and/or channel element function as a backup element of the original element, thus ensuring the functioning of the system, although the original element would be overloaded. Further, the copies of the transmitter and channel element can function alongside with the original element, thus improving the capacity of the system. Advantageously, the copied elements communicate with one another in a manner determined by the CORBA architecture.

In one embodiment of the invention, the transmitter and channel elements can change the routing information of a element of a lower level by means of acknowledgement messages. In one advantageous embodiment, the acknowledgement messages have been implemented in such a manner that an acknowledgement message to be given to a previous element in a chain, i.e. e.g. from a channel element to a forwarding element, or an acknowledgement message to be transmitted from the transmitter element to the channel element says that the transmission of the message further by the element in question is prevented. Further, in one advantageous embodiment, no alternative new channel element or transmitter element has been determined in the acknowledgement message, instead upon receiving in the acknowledgement message a notification informing of the failure of the transmission of the message, the recipient of the acknowledgment inquires the CORBA name service for an alternative element. In the CORBA name service, a list is kept of all the channel elements and all the transmitter elements. These elements have signed into the name service e.g. when starting, thus informing of their preparedness to message transmission.

Thus, if e.g. a forwarding element transmits a message to a particular e-mail channel element, which for some reason, e.g. due to being out of order or overload, is prevented from transmitting the message further, the forwarding element receivers an acknowledgement of this. In that case, the forwarding element in question requests the name service for an alternative e-mail channel element, and receivers from the name service a reference to this alternative e-mail channel element. After this, the forwarding element performs an attempt to transmit the message to be processed by the alternative channel element in question. Again, if this new channel element is prevented from transmitting the message, the forwarding element receives an acknowledgement of this and after this requests the name service for a new alternative e-mail channel element, etc.

Correspondingly, one acts in the same way between the channel element and the transmitter elements. In other words, if e.g. an e-mail channel element performs an attempt to transmit the message to an e-mail transmitter element to be modified into an e-mail form and to be transmitted further to the recipient of the message, and if the transmitter element in question is for some reason prevented from performing the task, the channel element receives an acknowledgement of this and requests the name service for a reference to an alternative e-mail transmitter element, etc.

Thus, the forwarding elements and the channel elements preferably change the routings used by them in failure situations in such manner that they use in future the alternative channel or transmitter element received by them. Further, there preferably is an attempt to automatically transmit a message that has already been processed further via an alternative element.

In one embodiment of the invention, the channel and/or transmitter elements have been implemented by means of the Event Service or Notification Service of the CORBA architecture.

In one embodiment of the invention, the telecommunication network comprises an Internet network.

In one embodiment of the invention, the telecommunication network comprises a digital mobile network.

As compared to prior art, the invention has the advantage that a message can be easily transmitted in several different formats to the recipients. The invention also provides a standard interface via which it is possible to transmit different types of messages. Those implementing the services only have to adopt the interface in question, and they do not need to know anything about the protocols, servers or other complicated mechanisms used in the transmission of messages. Further, a message with the same content can be sent using an identical mechanism to different types of terminal devices. For example, a message in text form can be sent from the service in the same manner as an e-mail, short message, facsimile or even as a voice mail.

The solution based on the CORBA of the invention enables dynamic modification of device configurations according to the situation without the need for modifying the services at all. The components can be run in one or more machines according to the situation. The transmitter and channel elements can also be duplicated into more than one machine to increase the dependability and capacity. The key idea of the invention is that the service only has to create one kind of message packet, and the media which is used for the transmission of the message, is selected by pushing the message packet into the channel reserved for the medium in question.

Further, the invention enables the fact that the transmitter component that listens to at the end of each channel is responsible for the fact of how the information content of the message packet in question is modified into the form required by the medium embodied in the transmitter component, and how the message is finally sent to its recipients. If the transmitter element is unable to forward the message packet to the terminal device, the transmitter element notifies the transmitting terminal device of the failure of the transmission preferably in accordance with the message mechanisms of the CORBA architecture. In that case, the advantage is that in the transmitting terminal device, the service/application that originally sent the message to the recipient is notified of the success/failure. The service/application in question can then react to the situation and present it to the end user as desired. In another embodiment, the notification of the failure of the transmission is sent to the terminal device in a short message (SMS). The transmitting terminal device can also be notified of a successful transmission, if the subscriber has chosen the acknowledgement service in question. One advantageous implementation of the acknowledgement service comprises a parameter included in the transmission data which indicates whether the sender of the message is sent an acknowledgment of a successful and/or unsuccessful transmission of the message to the recipient.

### LIST OF FIGURES

In the following, the invention will be described by means of the accompanying embodiments with reference to the accompanying drawing, in which
Fig. 1 is a description illustrating one system in accordance with the invention;
Fig. 2 represents one flow chart of a method in accordance with the invention;
Fig. 3 represents one interface defined by a message packet in accordance with the invention;
Fig. 4 represents one code example in accordance with the invention in which the service sends an e-mail message; and
Fig. 5 represents one code example in accordance with the invention in which the service sends a short message and asks for an acknowledgment of the distribution situation of the service.

### DETAILED DESCRIPTION OF THE INVENTION

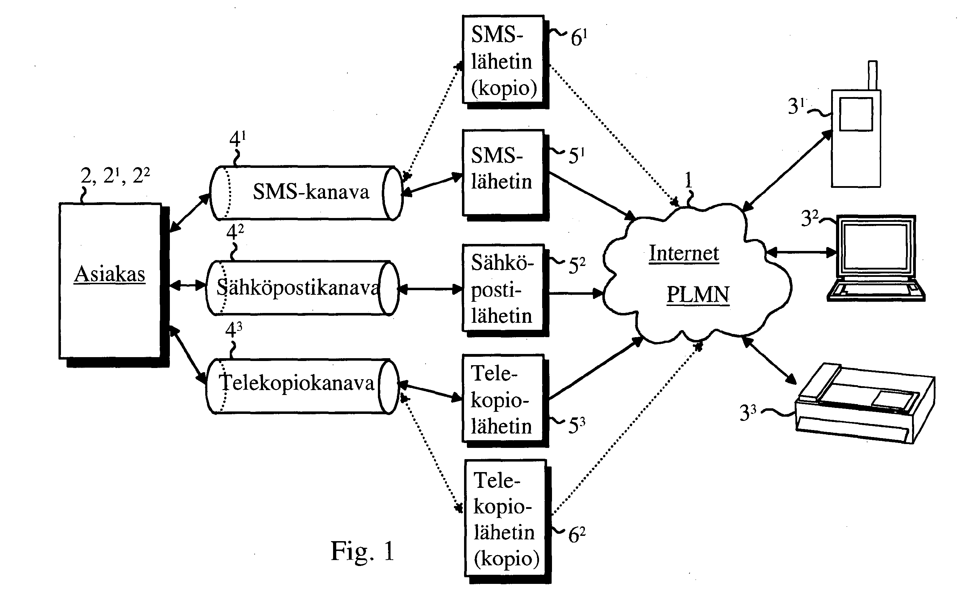

Fig. 1 shows one system in accordance with the invention. A client's terminal device 2 comprises a packaging element 2¹ and a forwarding element 2². Using the packaging element 2¹, the message to be transmitted as well as the transmission data needed in the transmission are combined to form a generic message packet, after which the forwarding element 2² is used to duplicate copies of the message packet for the channel elements 4¹, 4², 4³ to be used. The channel elements are like one-way tubes in which a message packet that was put into the one end will come out of the other end (FIFO, First In First Out). The channel elemerits can also be duplicated (not shown in Fig. 1).

In one embodiment, the message packet is duplicated into a short message 4¹, e-mail 4² and facsimile device channel element 4³. The short message channel element 4¹ transmits the message packet to a transmitter element 5¹ of short messages which modifies the message into a short message form and sends the message by way of a telecommunication network 1 to the terminal device, which in this case is a mobile station 3¹ provided with the short message feature. Further, the e-mail channel element 4² transmits the message to a transmitter element 5² of short messages which takes care of the modification of the message into an e-mail message and transmission of the message by way of the telecommunication network 1 to the terminal device, such as e.g. a personal computer 3² provided with an e-mail software application. If some transmitter element is unable to forward the message packet to the receiving terminal device, then in one embodiment, the transmitter element in question notifies the transmitting terminal device (not shown in Fig. 1) of the failure of the transmission, e.g. in accordance with the message mechanisms of the CORBA architecture. The notification of the failure of the transmission is thus preferably not transmitted via the channel elements.

Implemented in the transmitter element 5² of e-mail messages is all the functionality, e.g. the Simple Mail Transfer Protocol (SMTP), which is needed to send an e-mail. Correspondingly, the facsimile channel element 4³ transmits to the transmitter element 5³ of facsimile messages, which sends the message by way of the telecommunication network (1) to the receiving terminal device 3³. In a corresponding manner it is possible to create transmitter elements for other media, such as e.g. a voice mail transmitter element which reads (using the text-to-speech principle) messages in text form e.g. to the mobile station or answering machine of the user. Transmitter elements can also be duplicated. Fig. 1 shows a copy 6¹ of the transmitter element of short messages and a copy 6² of the transmitter element of a facsimile message. Correspondingly, also other transmitter elements can be duplicated.

In a channel element 4¹, 4²; 4³, the message is transmitted as a message packet typically using the TCP/IP protocol. The message packet is completely generic and can contain a message of any type, e.g. a message in text form, a facsimile, an image, a voice mail or a video. Each message packet represents a message sent to their recipients. The message packet includes the necessary information on the fact of where the packet is coming from and where it is going to, the actual content of the message and other necessary information. The message packets define outwards an interface via which the services can modify their content. The client's terminal device 2 sends a message in such a manner that it creates a new empty message packet, complements, via the aforementioned interface, the message packet with the necessary information (recipients, content, etc.) and pushes the message packet into the desired channel. In one embodiment, the transmitter element 5² of an e-mail uses for the data transfer the Simple Mail Transfer Protocol (SMTP) and the Internet Protocol (TCP/IP). Further, the transmitter element 5¹ of a short message uses e.g. the UCP and TCP/IP protocol to transfer the short message.

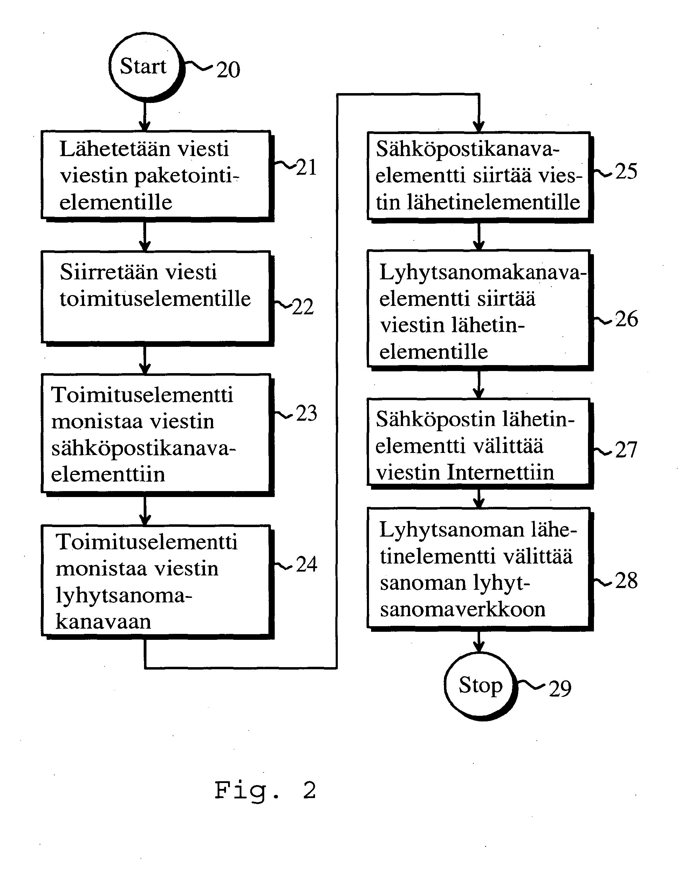

Fig. 2 represents one method diagram of the invention. First, a message is sent to the packaging element, after which the message is transferred to the forwarding element, steps 21 and 22. Next, the forwarding element duplicates the message into the e-mail channel element and short message channel element, steps 23 and 24. Further, the e-mail channel element transfers the message into the transmitter element of an e-mail, step 25. Similarly, a short message is transferred into the transmitter element of a short message, step 26. After this, the transmitter element of an e-mail transmits the e-mail to the Internet and the transmitter element of a short message transmits the message into a short message network, steps 27 and 28.

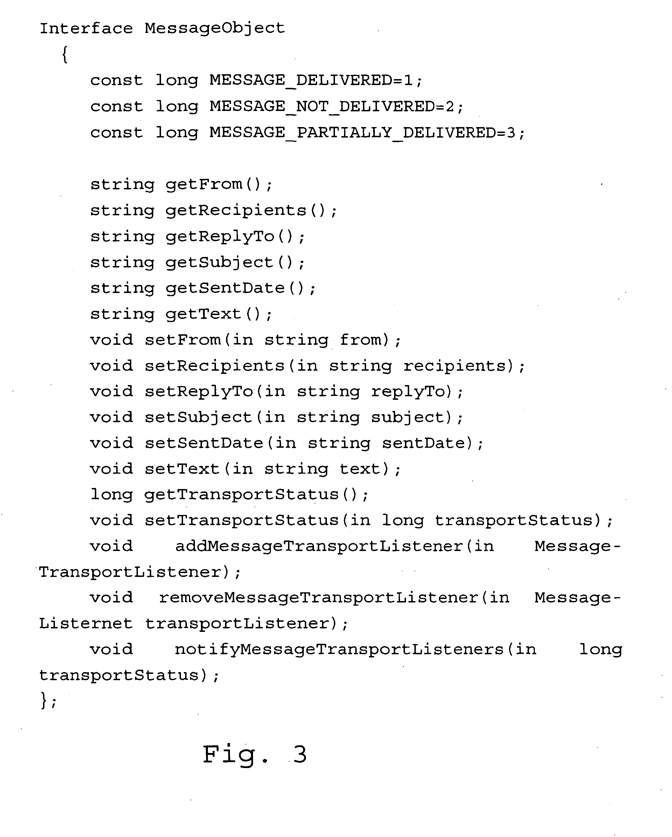

Fig. 3 represents one code example in accordance with the invention illustrating the interface defined by the message packets. This interface enables one to store the sender of the message, the reply address of the recipients, the topic, transmission time and text-formed content to a message packet or to read them from a message packet. The interface enables the creation and sending of e.g. an e-mail, short message and message packets of the text-voice mail type. The interface can also easily be extended. If the message packet must be able to contain e.g. video image, the interface can be complemented with the corresponding functionality by means of the getVideo and setVideo functions.

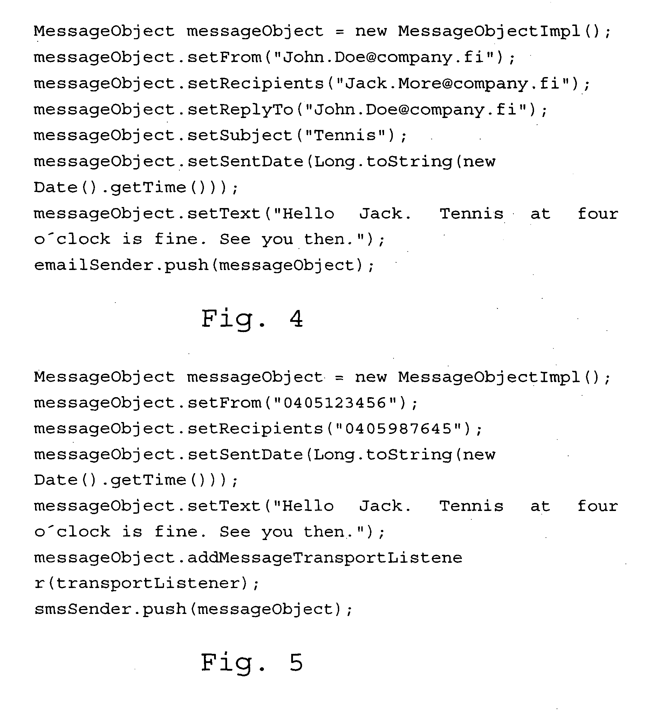

Fig. 4 represents one code example in accordance with the invention in which the service creates an empty message packet, saves to the message packet the topic of the message, the recipient, content (the actual message) and other necessary information and sends the message packet to the recipient by e-mail. As can be seen from the example code, the small bit of code needed to send an e-mail is short and simple. The maker of the service does not need to interfere with the fact of how e-mail is sent in practice.

Fig. 5 represents one code example in accordance with the invention in which the service sends a short message and informs that it wishes to receive a confirmation of the fact of whether one has managed to send the message or whether there has been some error in the transmission.

The invention is not restricted merely to the examples of its embodiments, instead many variations are possible within the scope of the inventive idea defined by the claims.

## Claims

1. A method for transmitting a message to one or more terminal devices of a different type in a telecommunication network, the method comprising the steps of:
creating the message to be transmitted;
sending the message in question;
transmitting the message in question; and
receiving the message in question,
**characterised in that** the method further comprises the steps of:
combining the message to be transmitted and the transmission data needed in the transmission to form a generic message packet when creating the message;
creating a copy of the message packet in question for each recipient when sending the message;
distributing the copies in accordance with the terminal devices of the recipients when sending the message,
modifying each copy into the form required by the terminal device of the recipient of the copy in question when transmitting the message; and
transmitting each modified copy to the recipient in accordance with the telecommunication protocol required by the terminal device of the recipient in question utilising the transmission data when transmitting the message.

2. The method as defined in claim 1, **characterised in that** the distribution of the copies if performed by means of the CORBA Event Service and CORBA Notification Service.

3. The method as defined in claim 1 or 2, **characterised in that** transmission data is written and read by means of a standard interface.

4. A system for transmitting a message to one or more terminal devices of a different type in a telecommunication network, the system comprising:
a telecommunication network (1) for transmitting the message;
a client's terminal device (2) for creating and sending the message to be transmitted, the terminal device being arranged in conjunction with the telecommunication network (1); and
one or more terminal devices (3, 3², ... 3^{N}) for receiving the message to be transmitted, which terminal devices are each of a predetermined type and are each arranged in conjunction with the telecommunication network (1),
**characterised in that** the system comprises:
a packaging element (2¹) for combining the message to be transmitted and the transmission data needed in the transmission of the message to form a generic message packet, which packaging element is arranged in conjunction with the terminal device (2);
a forwarding element (2²) for copying the message packet and for forwarding the copies to the channel elements (4¹; 4²,.. 4^{N}) in accordance with the receiving terminal devices (3¹, 3²,...3^{N}), which forwarding element is arranged in conjunction with terminal device (2) or in the telecommunication network;
one or more channel elements ((4¹, 4²,...4^{N}), each for receiving a message packet comprising the message to be transmitted to a terminal device of a predetermined type (3¹, 3² , ... 3^{N}) from the f orwarding element (2²)and for forwarding further to the corresponding transmitter element (5¹, 5², ...5^{N}) , which channel elements are each arranged in conjunction with the telecommunication network (1); and
one or more transmitter elements (5¹, 5², ...5^{N}) each for receiving a message packet comprising the message to be transmitted to a terminal device of a predetermined type (3¹, 3², ...3^{N}) from the corresponding channel element (4¹, 4², ...4^{N}) , for modifying into the form required by the terminal device in question, as well as for further forwarding to the terminal device in question in accordance with the telecommunication protocol required by the terminal device in question utilising the transmission data, which transmitter elements and channel elements are each arranged in conjunction with the telecommunication network (1).

5. The system as defined in claim 4, **characterised in that** the system further comprises one or more copied transmitter elements and/or channel elements (6¹, 6², ... 6^{N}) , which copied elements are each arranged in conjunction with the telecommunication network (1).

6. The system as defined in claim 4 or 5, **characterised in that** the channel elements are implemented by means of the CORBA Event Service or CORBA Notification Service.

7. The system as defined in claim 4, 5 or 6, **characterised in that** the telecommunication network (1) comprises an Internet network.

8. The system as defined in claim 4, 5, 6 or 7, **characterised in that** the telecommunication network (1) comprises a digital mobile network.
